(19) Europäisches Patentamt
European Patent Office
Office européen des brevets

(11) Publication number: **0 000 614**
**B1**

# (12) EUROPEAN PATENT SPECIFICATION

(45) Date of publication of patent specification: **25.11.81**

(51) Int. Cl.$^3$: **C 07 F 7/12**

(21) Application number: **78300045.8**

(22) Date of filing: **14.06.78**

## (54) Production of dichlorosilane derivatives.

(30) Priority: **17.06.77 JP 71908/77**
**20.01.78 JP 5063/78**

(43) Date of publication of application:
**07.02.79 Bulletin 79/3**

(45) Publication of the grant of the European patent:
**25.11.81 Bulletin 81/47**

(84) Designated Contracting States:
**CH DE FR GB**

(56) References cited:
**DE - B - 1 942 798**
**FR - A - 951 224**
**FR - A - 1 169 051**
**US - A - 2 954 390**

(73) Proprietor: **Chisso Corporation**
**6-32, Nakanoshima 3-chome Kitaku**
**Osaka-shi Osaka-fu (JP)**

(72) Inventor: **Koga, Isao**
**10-2 Otsutomocho, Kanazawaku**
**Yokohamashi, Kanagawaken (JP)**
Inventor: **Terui, Yohji**
**2505-3, Asahigaokacho, Chibashi**
**Chibaken (JP)**
Inventor: **Ohgushi, Masuhito**
**4-113, Chikuji, Minamatashi**
**Kumamotoken (JP)**
Inventor: **Kitahara, Tohru**
**11-1, Jinnai 2-chome, Minamatashi**
**Kumamotoken (JP)**

(74) Representative: **Tubby, David George et al,**
**MARKS & CLERK 57-60 Lincoln's Inn Fields**
**London WC2A 3LS (GB)**

**EP 0 000 614 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Production of dichlorosilane derivatives

The present invention relates to the production of dichlorosilane derivatives.

Diorganodichlorisilanes are very important compounds in the silicone resin industry but only relatively few compounds such as dimethyldichlorosilane and diphenyldichlorosilane are actually used on an industrial scale. With recent developments in the silicone resin industry, it has become appreciated that other diorganodichlorosilanes might be desirable.

In accordance with the present invention we provide a process for preparing substituted phenethyldichlorisilanes represented by the general formula

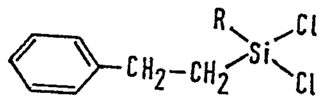
(I)

wherein R is an alkyl group having 3—20 carbon atoms or is a $\beta$-phenethyl group.

The novel process in accordance with the invention involves reacting an appropriately monosubstituted dichlorosilane with styrene using as catalyst a complex of platinum and a phosphine.

The dichlorosilane derivatives prepared by process of the invention are novel substituted phenethyldichlorosilanes.

Ethylphenethyldichlorosilane is itself a compound known for example from Chemical Abstracts, Vol 54, 22435 and French Patent Specification No. 1,169,051. As the French Specification describes, ethyl-$\beta$-phenethyldichlorosilane can be prepared in 75.5% yield by heating ethyldichlorosilane with styrene in the presence of a particular catalyst, namely a platinum/gamma-alumina catalyst. This catalyst is said not to be prone to catalyst fatigue, as were other catalysts known for the addition of hydrogensilanes to unsaturated hydrocarbons.

Platinum on alumina is also amongst the catalysts mentioned in US Patent No. 2,954,390 for use in preparing $\beta$-phenethylchlorosilane, the US and French Patents being approximately cotemporaneous documents. The US Patent mentions that in the then known additions of methyldichlorosilane to styrene, a mixture of $\alpha$-phenethyl and $\beta$-phenethyl substituted methyldichlorosilanes was obtained unless a platinum-on-charcoal catalyst was used.

Proceeding from this standpoint, the US Patent No. 2,954,390 puts forward the use of tetrahydrofuran or related solvents as the key to producing the $\beta$-isomer in preference to the $\alpha$-isomer, thereby obviating the need to use a platinum-on-charcoal catalyst. The various examples in the US Patent all describe only the addition of methyldichlorosilane to styrene, and moreover there is no mention of the catalysts now employed in the present process.

Later literature such as German Auslegeschrift No. 1,492,798 has taught that the platinum-catalysed additions of hydrogensilanes to unsaturated hydrocarbons are relatively inefficient since the known platinum catalysts have only poor activity. Better catalysts are said to be certain complexes of palladium.

In common with the other literature, this Auslegeschrift does not disclose the use of its catalysts for the addition of styrene to monosubstituted dichlorosilanes $RHSiCl_2$ wherein R is an alkyl group having 3—20 carbon atoms or is a $\beta$-phenethyl group.

Contrary to the teaching of the prior art, we have now found that certain monosubstituted dichlorosilanes will react efficiently with styrene in the presence of a catalyst which is a complex of platinum and a phosphine. Such a reaction readily gives a high yield of the corresponding $\beta$-phenethyl substituted silane, and in this way we have been able to prepare the novel compounds of formula (I).

More particularly, the novel compounds which can be prepared by our process include alkylphenethyldichlorosilanes represented by the general formula

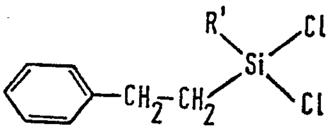
(II)

wherein R′ is an alkyl group having 3—20 carbon atoms.

Concrete examples of compounds of the formula (II) are propylphenethyldichlorosilane, isopropylphenethyldichlorosilane, butylphenethyldichlorosilane, isobutylphenethyldichlorosilane, pentylphenethyldichlorosilane, isoamylphenethyldichlorosilane, hexylphenethyldichlorosilane, heptylphenethyldichlorosilane, octylphenethyldichlorosilane, nonylphenethyldichlorosilane, decylphenethyldichlorosilane, undecylphenethyldichlorosilane, dodecylphenethyldichlorosilane, tridecylphenethyldichlorosilane, tetradecylphenethyldichlorosilane, hexadecylphenethyldichlorosilane, octadecylphenethyldichlorosilane and eicosylphenethyldichlorosilane.

The novel compounds from our process also include diphenethyldichlorosilane represented by the formula:

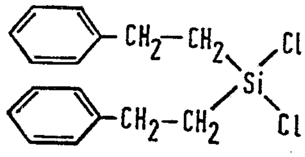

(III)

The method we provide for producing the compounds of formula (I) comprises reacting at a temperature of 30 to 200°C a monosubstituted dichlorosilane having the general formula $RHSiCl_2$, where R is as defined above, with styrene in the presence of a complex of platinum and a phosphine.

Where R in the monosubstituted dichlorosilane is an alkyl group having 3 to 20 carbon atoms it is preferred that the reaction with styrene is effected at 30 to 110°C. The reaction time is not critical but is usually 1 to 60 hours. The required starting material, a monoalkyldichlorosilane of formula $RHSiCl_2$, R' being as defined above, is preferably prepared by the addition reaction with dichlorosilane itself of an $\alpha$-olefin having 3 to 20 carbon atoms. For example such a starting material can be obtained by reacting dichlorosilane and an $\alpha$-olefin having 3 to 20 carbon atoms in the presence of a complex of a phosphine compound and a transition metal of group 8 at a temperature of 30 to 200°C. Conveniently the reaction is carried out for 1 to 60 hours at atmospheric or greater pressure. Where the transition metal is other than platinum the reaction is preferably effected at 50 to 200°C and the catalyst then separated off before the subsequent reaction with styrene. On the other hand, where the transition metal is platinum then the preferred reaction temperature is 30 to 110°C. Furthermore, the complex need not be separated off but can be retained in the liquid as the catalyst for the subsequent reaction with styrene.

Where R in the monosubstituted dichlorosilane is phenethyl, the required starting material, monophenethyldichlorosilane, can be obtained by reacting dichlorosilane with an equimolar or excess amount of styrene in the presence of a complex of a transition metal of group 8 and a phosphine. Examples of such complexes include chlorotris(triphenylphosphine)rhodium(I), $[RhCl(PPh_3)_3]$ and tetrakis(triphenylphosphine)platinum(O), $[Pt(PPh_3)_4]$. Suitably the reaction is effected at 30 to 200°C, and when the complex is a platinum complex then it is usually found that monophenethyldichlorosilane alone is obtained if the molar ratio of styrene to dichlorosilane is 1 or less, and that diphenethyldichlorosilane is also produced if styrene is present in molar excess. Such reactions may be represented by the following equations (1) and (2):

$$H_2SiCl_2 + 2PhCH = CH_2 \rightarrow (PhCH_2CH_2)_2SiCl_2 \quad (1)$$

$$PhCH_2CH_2SiHCl_2 + PhCH = CH_2 \rightarrow (PhCH_2CH_2)_2SiCl_2 \quad (2)$$

In other words, diphenethyldichlorosilane can be produced by reacting dichlorosilane with 2 or more molar equivalents of styrene or by reacting monophenethyldichlorosilane with 1 or more equivalents of styrene, the reaction being effected in the presence of a complex of platinum and a phosphine compound at 30 to 200°C. The preferred reaction time is 0.5 to 60 hours.

The complex of platinum and a phosphine compound employed in the methods of the present invention acts as a catalyst and is preferably tetrakis(triphenylphosphine)platinum(O). The preferred concentration of complex is 1 to $10^{-15}$, preferably 1 to $10^{-8}$, mol percent per silicon atom.

The production of the substituted phenethyldichlorosilanes can be carried out as a batch, flow-method or half-batch procedure. For example, diphenethyldichlorosilane can be produced by a method in which liquefied dichlorosilane, styrene and the catalytic complex are charged into a sealed reactor, reacted by heating under pressure, and distilling off the product after reaction. Other methods include those in which dichlorosilane is flowed into a reaction vessel containing styrene and a catalytic liquid, or in which styrene and dichlorosilane are counter-flowed through a fixed bed supporting a catalyst on a carrier.

A characteristic feature of the methods described is the use of dichlorosilane and/or a monosubstituted dichlorosilane as starting material for production of the substituted phenethyldichlorosilanes. In such methods it is to be noted that the hydrogen directly joined to the silicon of dichlorosilane or of the mono-substituted dichlorosilane adds only to the $\alpha$-position of styrene to form the product. It is of great advantage that the isomer in which the above mentioned hydrogen adds to the $\beta$-position of styrene is not formed. Moreover we have found that other by-products are not obtained and that the desired substituted phenethyldichlorosilanes are typically formed in an extremely high yield.

The compounds (I) are novel compounds which can be polymerized using conventional methods to produce polysiloxanes. As is well known the polymerization involves hydrolysis to give initially the corresponding hydroxy compounds which then readily undergo inter- and intra-molecular condensation. The polysiloxanes obtained using the substituted phenethyldichlorosilanes of formula (I) have improved heat-resistance and other desirable characteristics. The compounds of formula (I) can

thus be used for improving the heat-resisting and other properties of silicone oils, rubbers and varnishes which are used as electrical insulating materials, lubricating oils, water-repelling agents, paints, release agents and other known uses.

The present invention will now be illustrated by the following non-limiting specific Examples; comparative examples are also given. In the examples reference is made to the accompanying drawings, in which:

Figures 1 and 2 are respectively the infrared (ir) and nuclear magnetic resonance (nmr) spectra of n-hexylphenethyldichlorosilane produced in Example 1;

Figures 3 and 4 are respectively the ir and nmr spectra of n-dodecylphenethyldichlorosilane produced in Example 2; and

Figures 5 and 6 are respectively the ir and nmr spectra of diphenethyldichlorosilane produced in Example 4.

Example 1

3.80 g (20.5 millimol) of n-hexyldichlorosilane, 2.00 g (19.2 millimol) of styrene, and 0.023 g ($1.92 \times 10^{-5}$ mol) of tetrakis(triphenylphosphine)platinum(O) were introduced into a flask and reacted with stirring by heating in an oil bath at 60°C for 8 hours. Distillation under reduced pressure of the reacted mixture produced 5.6 g (17.5 millimol) of a product shown to be n-hexylphenethyldichlorosilane, $(n\text{-}C_6H_{13})$ $(C_6H_5CH_2CH_2)SiCl_2$.

The n-hexylphenethyldichlorosilane had a boiling point of 120 to 123°C/1mmHg and an $n_D^{20}$ of 1.5009. The elemental analysis was as follows:—

found: C: 57.87%, H: 7.57%, Cl: 23.5%;
theoretical: C: 58.12%, H: 7.66%, Cl: 24.51%.

The ir spectrum of this product was as shown in Figure 1 and the nmr spectrum was as shown in Figure 2.

Comparative Example 1

Reaction was carried out as in Example 1 except that an isopropanol solution of $H_2PtCl_6.6H_2O$ was substituted for the tetrakis(triphenylphosphine)platinum(O). A resinous product formed and no n-hexylphenethyldichlorosilane could be obtained.

Example 2

Reaction was carried out as in Example 1 except that n-dodecyldichlorosilane was substituted for the n-hexyldichlorosilane, whereby a product shown to be n-dodecylphenethyldichlorosilane $(n\text{-}C_{12}H_{25})$ $(C_6H_5CH_2CH_2)SiCl_2$, was obtained.

The boiling point of the product was 165.2 to 168.0°C/2mmHg. The ir spectrum of this product was as shown in Figure 3 and the nmr spectrum was as shown in Figure 4.

Example 3

0.89 mol of 1-hexane, 0.08 mol % (relative to dichlorosilane introduced later) of catalyst, tetrakis(triphenylphosphine)platinum(O), were introduced into a 500 ml pressure-proof stainless steel reactor which was sealed and then cooled with a dry-ice-methanol bath. After introduction into the reactor of 0.64 mol of dichlorosilane through an inlet pipe, the reactor was sealed and reaction was carried out by heating in an oil bath at 100°C for 2 hours with stirring. The reacted liquid was transferred to a flask, 0.64 mol of styrene was added and further reaction was carried out with stirring at 80°C for 4 hours. After the reaction, distillation was carried out under reduced pressure to obtain 0.58 mol of n-hexylphenethyldichlorosilane having a boiling point of 120 to 123°C/1mmHg.

Example 4

25.6 g (254 millimol) of dichlorosilane, 52.3 g (502 millimol) of styrene and 0.295 g (0.237 millimol) of tetrakis(triphenylphosphine)platinum(O) were charged into a 200 ml pressure-proof stainless steel reaction tube as in the procedure Example 3, then heated in an oil bath at 150°C for 16 hours with stirring. Distillation of the reacted liquid under reduced pressure gave 36.0 g of a product shown to be diphenethyldichlorosilane, $(C_6H_5CH_2CH_2)_2SiCl_2$.

The diphenethyldichlorosilane had a boiling point of 140 to 151°C/1.0mmHg. The ir spectrum was as shown in Figure 5. Absorptions are observed for aromatic C—H stretch at 3000 to 3100 $cm^{-1}$ and for deformation of a C—H directly connected to Si at 1260 $cm^{-1}$, but no characteristic absorption is seen for Si—H in the neighbourhood of $2100^{-1}$. The nmr spectrum was as shown in Figure 6. Referring to the $\delta$ scale (ppm), there is no signal corresponding to Si—*H* at 3.0 to 5.0, but signals are seen at 0.99 (corresponding to Si—$CH_2$—) at 2.72 (—$CH_2$—$CH_2$—$C_6H_5$) and at 7.12 ($C_6H_5$—). The integration for these signals was in the ratio 4:4:10. In the mass spectra, a parent ion $M^+$ 308 was observed.

A polysiloxane was then prepared in a conventional manner using the diphenethyldichlorosilane as obtained in this Example. Initial hydrolysis at 60°C give a product of average molecular weight 860 which was shown by ir to include cyclic components formed by intramolecular condensation. This initial product had a refractive index (25°C, D) of 1.570 and a kinetic velocity (25°C) of 280 centistokes. Further reaction at 80°C of 94 g of the product with 3 g of hexamethyldisiloxane in the presence of 1 ml of 10% aqueous tetramethylammonium hydroxide gave a polysiloxane of average molecular weight 3800.

The polysiloxane had the following physical characteristics:

| | |
|---|---|
| Refractive index (25°C, Na D-line) | 1.573 |
| Kinetic Viscosity (25°C) | 1210 centistokes |
| Temperature-Viscosity coefficient | 0.898 |
| Volume resistivity (20°C) | $2.8 \times 10^{15}$ (OHM.CM) |
| Dielectric constant (20°C) | 2.82 |
| Dielectric dissipation factor (20°C) | $7 \times 10^{-5}$ |
| Surface tension | 25.7 (Dyne/Square centimeter) |
| Coefficient of Friction (25°C) | 0.15 |

Comparative Example 2

30.0 g (300 millimol) of dichlorosilane, 56.5 g (543 millimol) of styrene and 50 ml of an isopropanol solution of chloroplatinic acid ($H_2PtCl_6.6H_2O$) containing $4.83 \times 10^{-6}$mol of the acid were charged into a 200 ml pressure-proof stainless steel reaction tube and reaction was carried out as in the procedure of Example 3 by heating in an oil bath at 50°C for 15 hours with stirring. After reaction, the reacted liquid resinified and no diphenethyldichlorosilane could be obtained.

Comparative Example 3

31.7 g (314 millimol) of dichlorosilane, 56.3 g (541 millimol) of styrene and 0.2182 g ($2.36 \times 10^{-4}$ mol) of chlorotris(triphenylphosphine)rhodium(I) were charged into a 200 ml pressure-proof stainless steel reaction tube as in the procedure of Example 3 and reaction was carried out by heating in an oil bath at 150°C for 20 hours with stirring.

After reaction, the reacted liquid was distilled under a reduced pressure. 45.7 g (223 millimol) of a product found to be monophenethyldichlorosilane was obtained, but no diphenethyldichlorosilane was identified in the distillate.

Example 5

Following the procedure of Example 3, 73.2 g (725 millimol) of dichlorosilane, and 92.7 g (890 millimol) of styrene were reacted in the presence of 0.1164 g ($1.68 \times 10^{-4}$ mol) of chlorotris(triphenylphosphine) rhodium (I) at 100°C for 16 hours and then the reacted liquid was distilled to obtain 147.6 g of monophenethyldichlorosilane (b.p. 95°C/7 mmHg).

10.3 g (50 millimol) of the monophenethyldichlorosilane, 22.7 g (218 millimol) of styrene and 0.08 g ($6.42 \times 10^{-5}$ mol) of tetrakis(triphenylphosphine)platinum(O) were charged into a 100 ml stainless steel reaction tube and reacted by heating in an oil bath at 100°C for 15 hours with stirring. After reaction, the reacted liquid was distilled under reduced pressure to obtain 13.6 g of a product having a boiling point of 141°C/1.5mmHg and having the same ir, nmr and mass spectra as the product of Example 4. It was thus confirmed that the product produced by the present example was diphenethyldichlorosilane.

CLAIMS

1. A method for producing a substituted phenethyldichlorosilane having the general formula

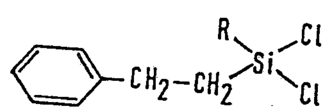

(I)

wherein R is an alkyl having 3 to 20 carbon atoms or a $\beta$-phenethyl group, which comprises reacting at a temperature of 30 to 200°C a monosubstituted dichlorosilane having the general formula $RHSiCl_2$, where R is as defined, with styrene in the presence of a complex of platinum and a phosphine.

2. A method according to Claim 1 wherein the complex is tetrakis(triphenylphosphine)platinum-(O).

3. A method according to Claim 1 or Claim 2 wherein R is an alkyl group having 3 to 20 carbon atoms and the reaction with styrene is effected at 30 to 110°C.

4. A method according to Claim 1 or Claim 2 wherein R is phenethyl.

5. A method according to any one of Claims 1 to 4, wherein the monosubstituted dichlorosilane $RHSiCl_2$ is prepared by reacting at a temperature of 30 to 200°C dichlorosilane itself with, as may be appropriate, an $\alpha$-olefin having 3 to 20 carbon atoms or styrene, in the presence of a complex of platinum and a phosphine.

6. A method according to Claim 5 wherein the complex employed for reaction of the dichlorosilane itself is also employed for reaction of the monosubstituted dichlorosilane produced.

7. A method according to Claim 6 wherein when R is $\beta$-phenethyl, dichlorosilane itself is reacted with 2 or more molar equivalents of styrene to give diphenethyldichlorosilane.

**Revendications**

1. Procédé de préparation d'un phénéthyldichlorosilane répondant à la formule:

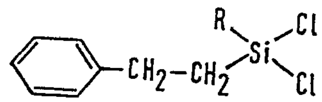

(I)

dans laquelle R est un groupe alkyle en $C_3$ à $C_{20}$ ou un groupe phénéthyle caractérisé en ce qu'il consiste à faire réagir à une température de 30 à 200°C un dichlorosilane monosubstitué de formule générale $RHSiCl_2$ où R est tel que déjà défini, avec un styrène et en présence d'un complexe du platine et d'une phosphine.

2. Procédé suivant la revendication 1, caractérisé en ce que le complexe du platine est le tétrakis(triphénylphosphine)platine(O).

3. Procédé suivant l'une quelconque des revendications 1 et 2, caractérisé en ce que R est un groupe alkyle en $C_3$ à $C_{20}$ et en ce que la réaction avec lestyrène s'effectue de 30 à 100°C.

4. Procédé suivant l'une quelconque des revendications 1 et 2, caractérisé en ce que R est le phénéthyle.

5. Procédé suivant l'une quelconque des revendications 1 à 4, caractérisé en ce que l'on prépare le dichlorosilane monosubstitué $RHSiCl_2$ en faisant réagir, à une température de 30 à 200°C, du dichlorosilane lui-même avec, selon le cas, une $\alpha$-oléfine en $C_3$ à $C_{20}$ ou du styrène, en présence d'un complexe du platine et d'une phosphine.

6. Procédé suivant la revendication 5, caractérisé en ce que le complexe du platine utilisé pour la réaction du dichlorosilane lui-même est également utilisé pour la réaction du dichlorosilane monosubstitué produit.

7. Procédé suivant la revendication 6, caractérisé en ce que, lorsque R est le phénéthyle, on fait réagir le phénéthyldichlorosilane lui-même avec deux équivalents molaires ou plus de styrène, pour obtenir du diphénéthyldichlorosilane.

**Patentansprüche**

1. Verfahren zur Herstellung eines substituierten Phenäthyldichlorosilans der allgemeinen Formel

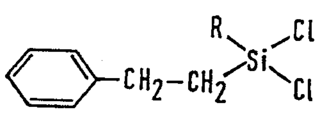

(I)

wobei R eine Alkylgruppe mit 3 bis 20 Kohlenstoffatomen oder eine Phenäthylgruppe ist, bei welchem man ein monosubstituiertes Dichlorosilan der allgemeinen Formel $RHSiCl_2$, wobei R der obigen Definition entspricht, bei einer Temperatur von 30 bis 200°C in der Anwesenheit eines Komplexes von Platin und eines Phosphins mit Styrol reagieren lässt.

2. Verfahren nach Anspruch 1, bei welchem der Komplex Tetrakis(triphenylphosphin)platin(O) ist.

3. Verfahren nach einem der Ansprüche 1 oder 2, bei welchem R eine Alkylgruppe mit 3 bis 20 Kohlenstoffatomen ist und die Reaktion mit dem Styrol bei einer Temperatur von 30 bis 110°C durchgeführt wird.

4. Verfahren nach Anspruch 1 oder 2, bei welchem R ein Phenäthyl ist.

5. Verfahren nach einem der Ansprüche 1 bis 4, bei welchem man das monosubstituierte Dichlorosilan $RHSiCl_2$ dadurch herstellt, dass man Dichlorosilan selbst in der Anwesenheit eines Komplexes von Platin und eines Phosphins bei einer Temperatur von 30 bis 200°C geeigneterweise mit einem $\alpha$-Olefin mit 3 bis 20 Kohlenstoffatomen oder mit Styrol reagieren lässt.

6. Verfahren nach Anspruch 5, bei welchem der für die Reaktion des Dichlorosilans selbst verwendete Komplex auch für die Reaktion des gebildeten monosubstituierten Dichlorosilans verwendet wird.

7. Verfahren nach Anspruch 6, wobei man die Reaktion mit zwei oder mehr molaren Äquivalenten an Styrol durchführt, wenn R selbst Phenäthyldichlorosilan ist, so dass man Diphenäthyldichlorosilan erhält.

FIG. 1

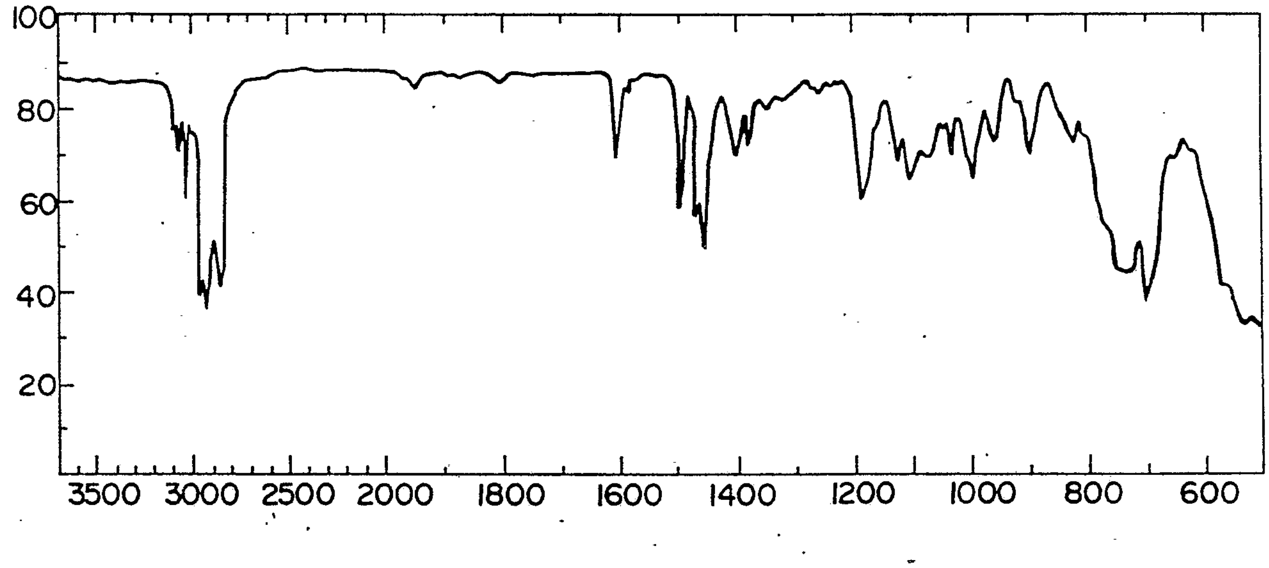
100
80
60
40
20
3500
3000
2500
2000
1800
1600
1400
1200
1000
800
600

FIG. 2

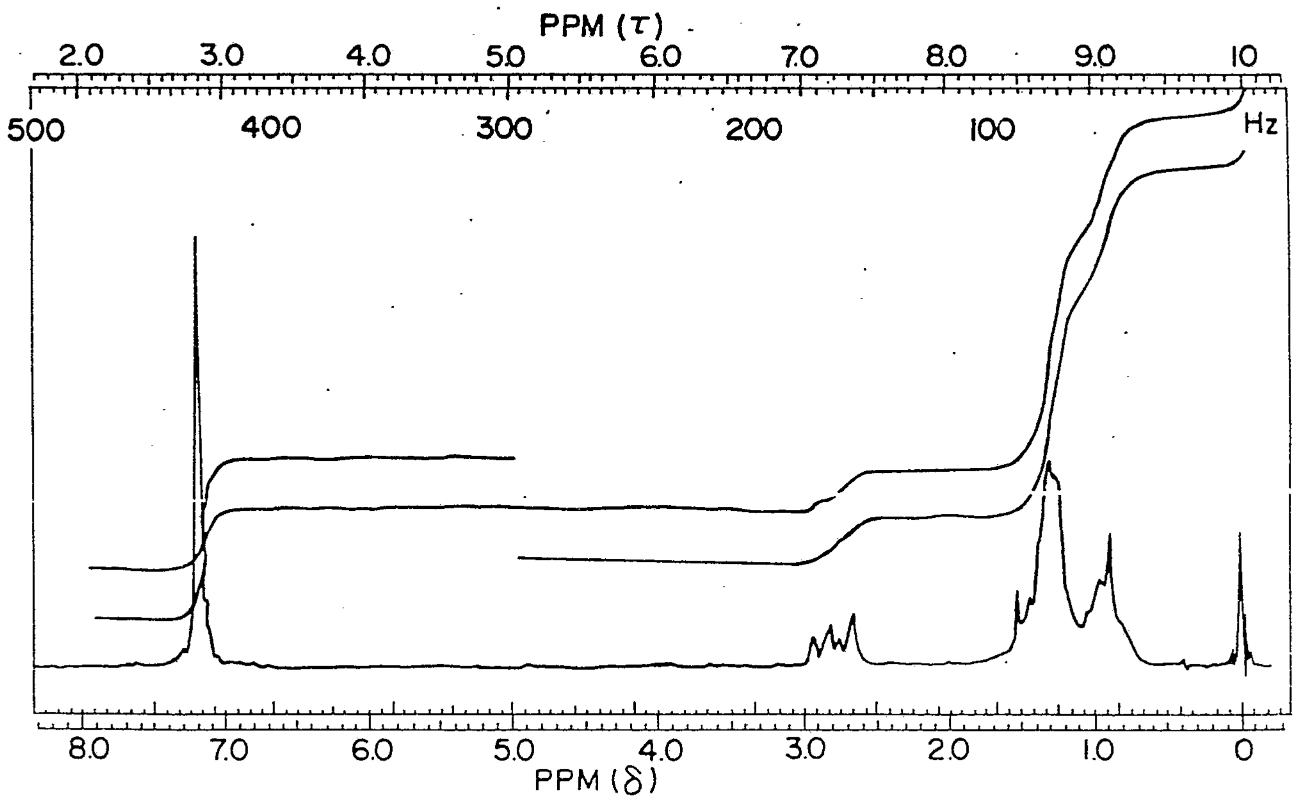
PPM (τ)
2.0
3.0
4.0
5.0
6.0
7.0
8.0
9.0
10
500
400
300
200
100
Hz
8.0
7.0
6.0
5.0
4.0
3.0
2.0
1.0
0
PPM (δ)

FIG. 3

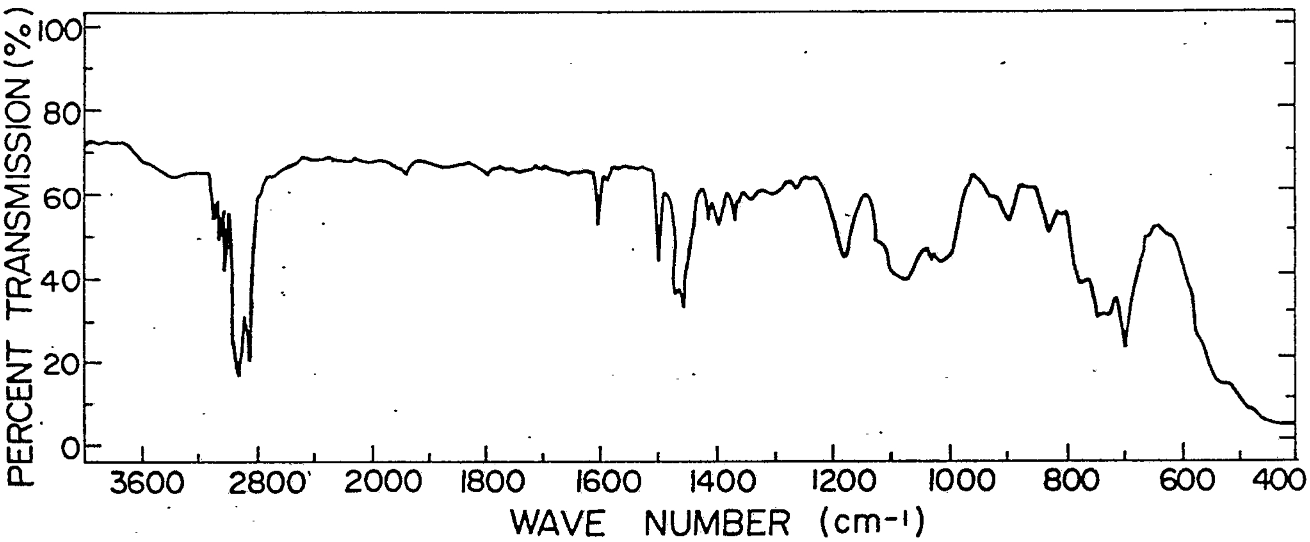
PERCENT TRANSMISSION (%)
100
80
60
40
20
0
3600
2800
2000
1800
1600
1400
1200
1000
800
600
400
WAVE NUMBER (cm-1)

FIG. 4

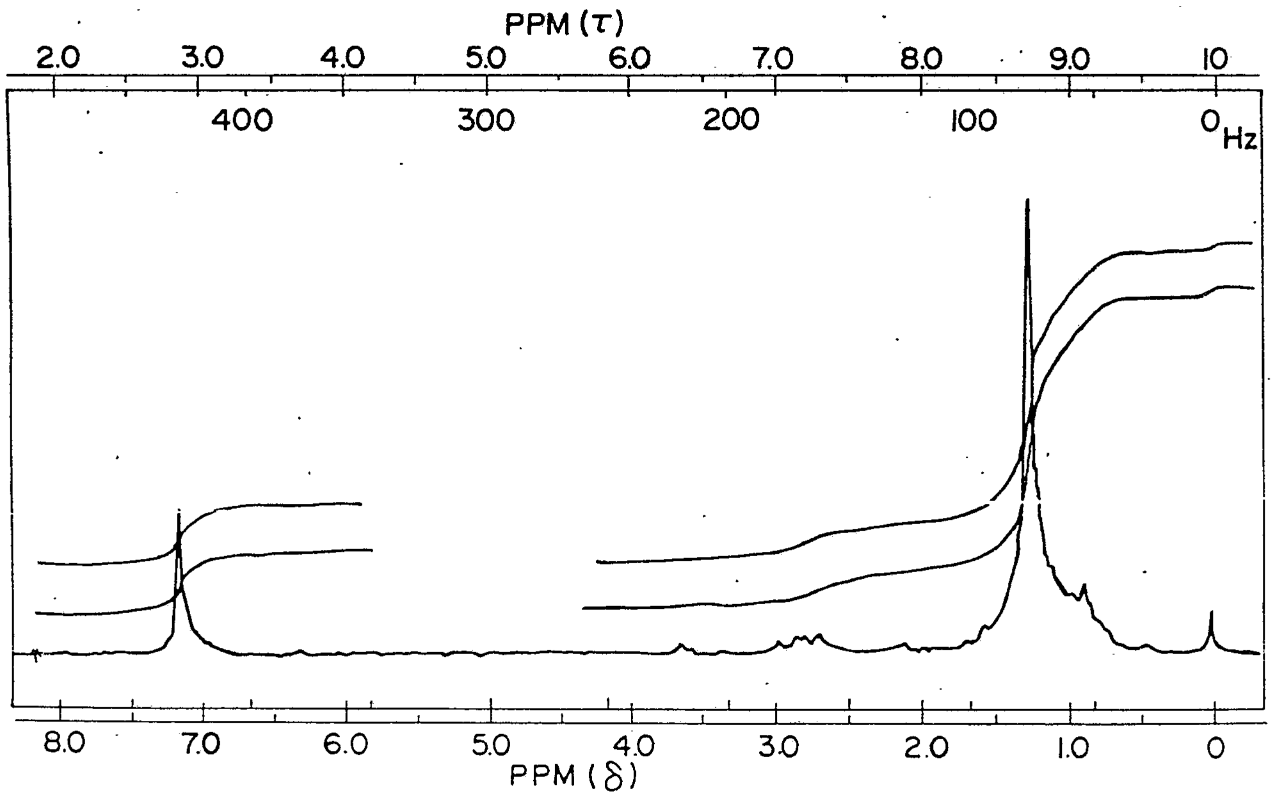
PPM (τ)
2.0
3.0
4.0
5.0
6.0
7.0
8.0
9.0
10
400
300
200
100
0 Hz
8.0
7.0
6.0
5.0
4.0
3.0
2.0
1.0
0
PPM (δ)

FIG. 5

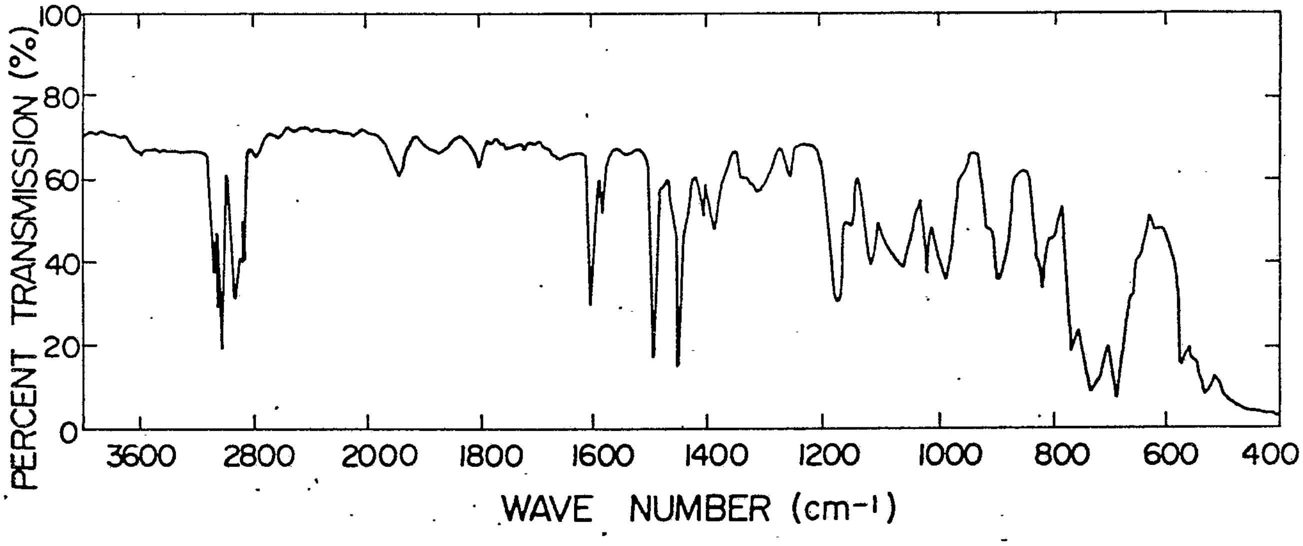
PERCENT TRANSMISSION (%)
100
80
60
40
20
0
3600
2800
2000
1800
1600
1400
1200
1000
800
600
400
WAVE NUMBER (cm-1)

FIG. 6

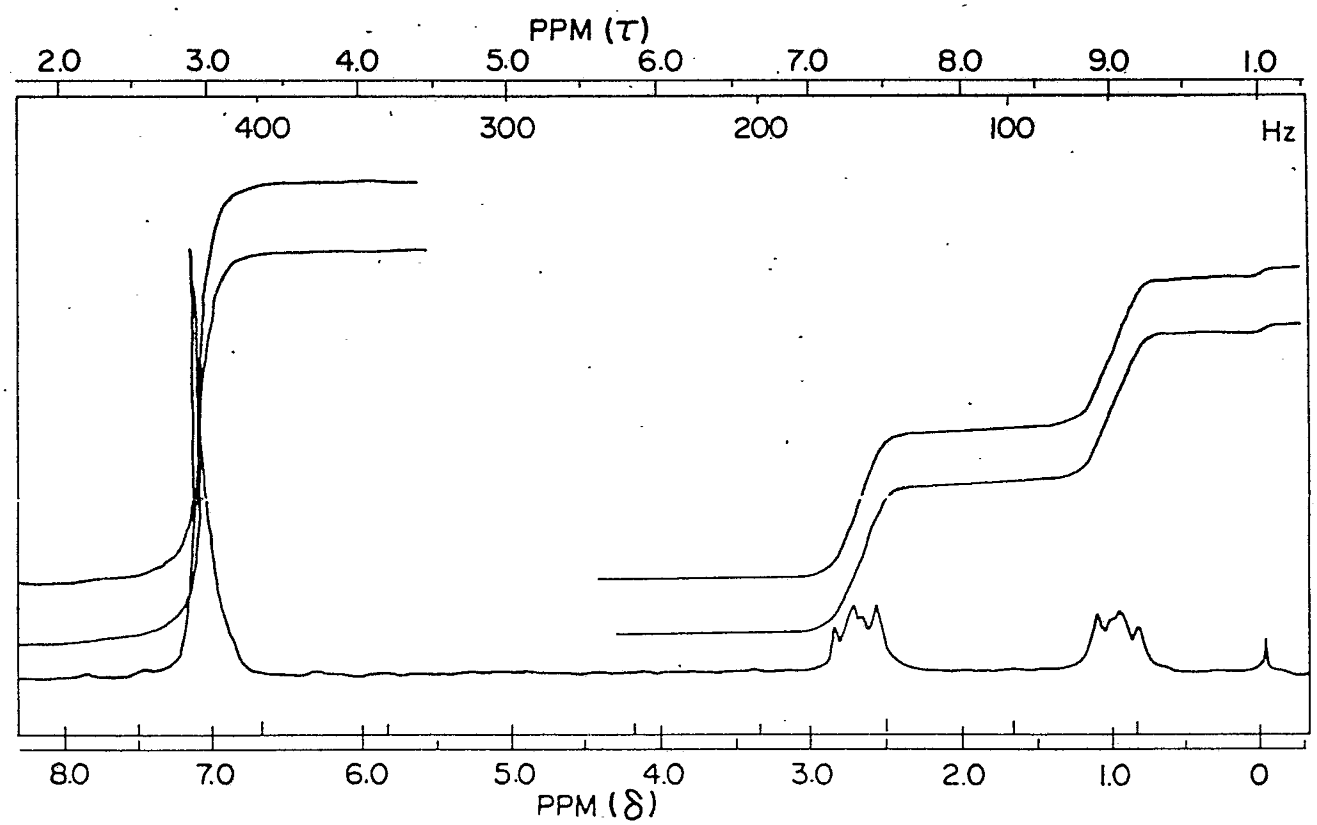
PPM (τ)
2.0
3.0
4.0
5.0
6.0
7.0
8.0
9.0
1.0
400
300
200
100
Hz
8.0
7.0
6.0
5.0
4.0
3.0
2.0
1.0
0
PPM (δ)